# EUROPEAN PATENT SPECIFICATION

(11) **EP 3 046 802 B1**
(45) Date of publication and mention of the grant of the patent: **01.05.2019**
(21) Application number: 14766506.1
(22) Date of filing: 17.09.2014
(51) Int. Cl.: B60N 2/28

(54) **CHILD SAFETY SEAT**
KINDERSITZ
SIÈGE DE SÉCURITÉ POUR ENFANT

(30) Priority: 19.09.2013 NO 20131260
(43) Date of publication of application: 27.07.2016
(73) Proprietor: HTS Hans Torgersen & Sønn AS, 3535 Krøderen (NO)
(72) Inventor: VAN DER VEER, Erik, NL-3533 AD Utrecht (NL); VAN MOURIK, Okke, NL-3514 BS Utrecht (NL); GUTTER, Hans, NL-3741 PH Baarn (NL)
(74) Representative: Onsagers AS
(86) International application number: PCT/EP2014/069815
(87) International publication number: WO 2015/040068

(56) References cited:
- EP-A1- 2 161 160
- EP-A1- 2 295 287
- EP-A2- 2 022 663
- WO-A2-2005/108155
- DE-U1-202004 017 276

## Description

The present invention concerns a child safety seat in accordance with the introductory part of the independent claim.

The present invention concerns a child safety seat for use in a passenger seat of a vehicle, which safety seat is fastened to the passenger seat by attachment means such as a vehicle safety belt or standard anchorage units such as Isofix connectors. More particularly the present invention relates to a rearwardly facing child safety seat and an adjustment device for the child safety seat, where the adjustment device is used to provide more or less leg for a child in the child safety seat and/or more leg space for a driver or a passenger in a front seat or rear seat of the vehicle.

A vehicle has safety belts provided at the front and rear seats, where the safety belts are used to secure the passengers in the vehicle during the drive. However, such safety belts are not adapted to be able to secure a child in the vehicle, whereby safety legislations require the use of a child safety seat for securing a child in a vehicle.

Child safety seats are used to secure children in vehicles in order to protect the child from injury in the event of collision or sudden stop of the vehicle. The child safety seats are therefore designed to be fitted into the vehicle seat and secured to the vehicle seat by using attachment means such as a vehicle safety belt or Isofix connectors.

However, such child safety seats do not usually allow for adjustment to suit the age and size of the child, for instance to adjust the leg space for the child in rearward facing child safety seats while the child is growing.

Furthermore, vehicle seats, vehicle seat belts, anchorage points, space between the vehicle's front and rear seats etc. vary greatly between different models of vehicles, which may result in that a child safety seat have to be adapted when used from one vehicle to another.

DE 202004017276 U1 discloses a child seat, where the child seat faces backwards and is supported by a ring pressed against the vehicle seat back. The ring is mounted on a telescopic rod. The back of the child seat is supported by a yoke which rests on the vehicle floor.

WO 2012/172001 A1 relates to a base for a child safety seat, to which base the child safety seat releasably can be connected to, where the base comprises a floor support device, Isofix connectors and a support surface for the child safety seat, where the base further comprises a fastening and adjustment mechanism for the child safety seat and the Isofix connectors. The fastening and adjustment mechanism comprises a first handle that is connected to and cooperating with at least one hook and an indicator device and a second handle being connected to a locking device.

EP 2.431.219 A2 discloses a base for infant seat in automobiles, where the base comprises means for fastening it to the automobile seat and means for engaging it to the infant seat, wherein said engaging means to the infant seat comprises a pair of rods that can be engaged to hooks provided at the lower part of the infant seat. It permits the base structure to be narrower than the conventional bases, occupying a reduced space on the automobile seat when the infant seat is not used.

Thus, it is an object of the present invention to provide a rearwardly facing child safety seat that can enable better adjustment of leg space for the child as the child grows.

A further object of the present invention is to provide a rearwardly facing child safety seat that offers an easy adjustment of the child safety seat and/or installation of the child safety seat in vehicles, where a space between a front seat and rear seat of a vehicle or a space between a front seat and a dashboard of a vehicle in different models of vehicles may vary greatly.

It is also an object of the present invention to minimize and possibly alleviate one or more of the disadvantages of the prior art, or to provide a useful alternative.

A further object of the present invention is to provide a child safety seat, such that the child safety seat can be adapted to the growth of the child and used in different vehicle models and car seat configurations.

These objects are achieved with a child safety seat comprising the features of claim 1, with additional embodiments set forth in the dependent claims. According to the present invention the child safety seat comprises a base and a child seat, where the child seat may comprise a sitting section and a back section including a head section. However, a person skilled in the art would know that the child seat may also comprise fewer or more sections. The child seat may be arranged to be releasably connected and disconnected to the base, or the child seat may be integrated in the base.

The base may be provided with both Isofix connectors and attachment means for safety belts, such that the child safety seat can be secured in the vehicle seat either by connecting the Isofix connectors to standard anchorage points provided in the vehicle seat, or by using the vehicle seat belts.

Furthermore, the child safety seat according to the present invention also comprises a front brace, where the front brace will prevent the child safety seat from rotating about the anchorage points in the event of a collision with the vehicle. The front brace will then, when the child safety seat is in use, be arranged to be in abutment with a back portion or back rest of the vehicle seat. According to the present invention, the front brace is adapted to be adjustable relative to the child seat (or the base), where the purpose of the adjustment of the front brace is to provide more space for the legs of the child seated in the child safety seat. In one aspect of the invention the front brace comprises an adjustment mechanism for the front brace, where the adjustment mechanism comprises a release handle and a pivot element provided with at least one pin. The front brace is also connected fixedly to hollow bar(s), where each of the hollow bar(s) can receive a guide element connected to the base through a holder.

An upper side of the guide element(s) may be provided with a plurality of spaced apart holes or teeth along its length. Similarly, an upper side of the hollow bar(s) is/are provided with one hole. When the guide element(s) is/are received in the hollow bar(s), the front brace can be locked in a position relative the child safety seat (or the base) by aligning the hole in the hollow bar with a hole in the guide element, whereby the pin of the pivot element can protrude through the hole in the hollow element and into the hole of the guiding element. As the release handle is connected to the pivot element through a connection element, the front brace can be unlocked from the guiding elements by pushing down the release handle. The rotation of the release handle through a pivot point will result in that also the pivot element is rotated about a distanced pivot point (i.e. the release handle and the pivot element have different pivot points, where the pivot points are spaced apart) whereby the pin is brought out of abutment with the holes in the hollow bar and the guide elements. The front brace can now be adjusted along the guide elements and locked in another hole provided in the guide elements.

However, one could also envisage that the hollow bar(s) is/are provided with a plurality of spaced apart holes, while the guide element(s) is/are provided with one hole. The adjustment mechanism for the front brace could then be connected, in appropriate ways, to the guiding element(s).

A spring element may be connected to the release handle, where the spring element is arranged such that the spring element is compressed when the release handle is pushed down and decompressed when the release handle is released, in order to ensure that the release handle is forced to a position where the pin, through the pivot element, is brought to abutment with a hole in the guiding element, i.e. a locking position.

The hollow bars and/or guide elements may have a square form, but they may also have a U-form, be a flat element etc.

In another aspect of the present invention one side of the front brace may be arranged to pivot around a connection point. The same adjustment mechanism (i.e. the release handle and the pivot element provided with at least one pin) may be used in this case, with the difference that the front brace will now be provided with a plurality of spaced apart holes, where the holes are arranged above the connection point. Once the front brace is released as described above, the front brace can be rotated around the connection point, whereby an upper side of the front brace can be moved relative the child safety seat (or base). Moving the upper side of the front brace away from the child safety seat will provide more space for the leg of the child and moving the upper part of the front brace towards the child safety seat will provide less leg space for the child.

The front brace may be releasably connected to the base in order to be able to provide a more compact child safety seat, for instance when the child safety seat is to be stowed away, as the front brace then can be removed from the child safety seat.

It should be understood that instead of providing holes in the hollow bar(s), guide element(s) and front brace, the hollow bar(s), guide element(s) and the front brace may be provided with a plurality of teeth or the like, where the pin of the pivot element then will cooperate with one of the teeth.

The child safety seat may also comprise a floor support, where the floor support may be connected to either the base or an Isofix connector frame. The floor support is pivotally connected to the base or the Isofix connector frame, such that the floor support may be brought from an inactive and retracted position beneath the child safety seat and to an active and extended position in contact with the floor of the vehicle in order to support the child safety seat. Furthermore, the floor support may comprise an adjustment mechanism in order to be adjustable in length, thereby providing a sufficient support for the child safety seat. A person skilled in the art will know how the floor support is to be arranged, whereby this is not further described herein.

According to the present invention, the Isofix connectors are, through an Isofix connector frame, connected to a frame of the base. The Isofix connector frame may comprise two parallel bars and a traverse bar, where the parallel bars and the traverse bar are connected in such a way that the bars can be slidingly received within hollow bars of the frame of the base. Furthermore, the Isofix connectors may be pivotally connected to the Isofix connector frame, such that the Isofix connectors can be adapted to fit anchorage points in a vehicle, as the placement and/or arrangement of these anchorage points may vary greatly between different models of vehicles.

An upper side of the parallel bars is provided with a plurality of spaced apart apertures along the length of the parallel bars, where the apertures together with an adjustment mechanism for the Isofix connectors are used to adjust the length of the Isofix connectors relative the base. However, it should be understood that the parallel bars of the Isofix connector frame, instead of apertures, may be provided with teeth.

The adjustment mechanism for the Isofix connectors may comprise a push button that is connected to a lever, the lever including a pin and being pivotally connected to a bolt or the like. As the adjustment mechanism is arranged on the frame of the base and each of the hollow bars of the frame of the base is provided with an aperture, the parallel bars of the Isofix connector frame can be locked to the frame of the base through the pin being brought into abutment with the apertures. When the Isofix connectors are to be pulled out from the frame of the base, the push button is pressed down, this resulting in that the pin is brought out of abutment with the apertures in the parallel bars of the Isofix connector frame and the hollow bars of the frame of the base, whereby the Isofix connectors can be pulled further out or pushed further in into the frame of the base. The Isofix connectors can be pushed in without pushing in the push button. By pushing in the Isofix connectors the pin is pushed out of abutment from one hole and automatically into abutment in the next hole. A person skilled in the art would know how this can be obtained, whereby this is not described further herein.

Other advantages and characteristics of the present invention will be apparent from the following detailed description, the appended drawings and the following claims, wherein
Figure 1 shows a child safety seat according to the present invention arranged in a vehicle seat of a vehicle,
Figures 2A-2B show a perspective side view of the child safety seat according to the present invention, where the child safety seat in figure 2A is shown in an unadjusted position, while the child safety seat in figure 2B is shown in an adjusted position,
Figures 3A-3D show an adjustment mechanism for the child safety seat according to the present invention,
Figures 4A-4D show details of the adjustment mechanism according to figures 3A-3D, and
Figures 5A-5B show further details of an adjustment mechanism according to figures 3A-3D.

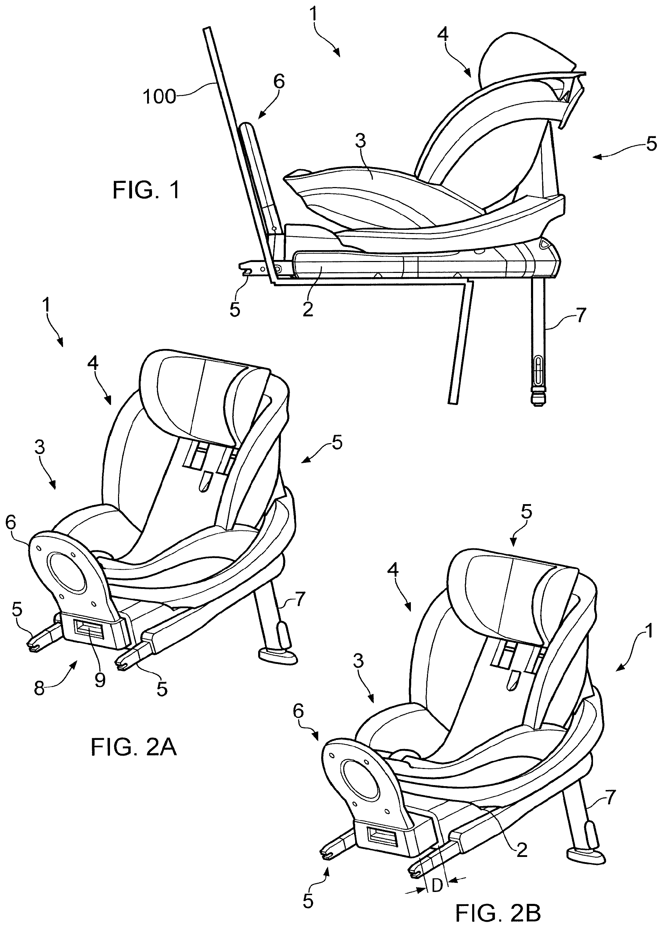

Figure 1 shows a child safety seat 1 according to the present invention secured in a vehicle seat 100, where the child safety seat 1 is intended to be used in a rearward-facing position. The child safety seat comprises a base 2 and a child seat S comprised of a sitting section 3 and a back section 4 including a head section. The child seat S can be releasably connected to the base 2 or can be integrated with the base 2. The base 2 is provided with two Isofix connectors 5, such that the child safety seat 1 can be connected to standard anchorage points (not shown) arranged in the vehicle seat 100. When the child safety seat 1 is secured in the vehicle seat 100, the base 2 will be arranged on an upper seat surface of the vehicle seat 100 and the Isofix connectors 5 will be fixed to the standard anchorage points (not shown) arranged in the vehicle seat 100.

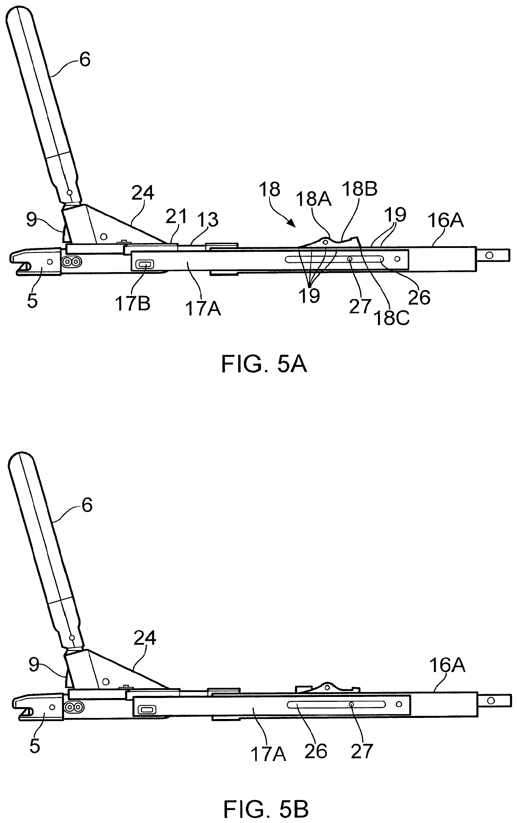

Each Isofix connector 5 is connected to an Isofix connector frame 17, where the connector frame 17 comprises two bars 17A. The bars 17A of the Isofix connector frame are slidably arranged in a frame 16 of the base 2, such that the Isofix connectors 5 can be adjusted relative to the child safety seat 1 (or base 2) in order to be able to best possibly adapt or accommodate the child safety seat 1 in the vehicle seat 100 due to variation in vehicle seats, positioning of the anchorage points etc. between different models of vehicles. The Isofix connectors 5, the Isofix connector frame 17 and an adjustment mechanism 18 for the Isofix connectors 5 will be described and discussed in greater detail according to figures 5A and 5B.

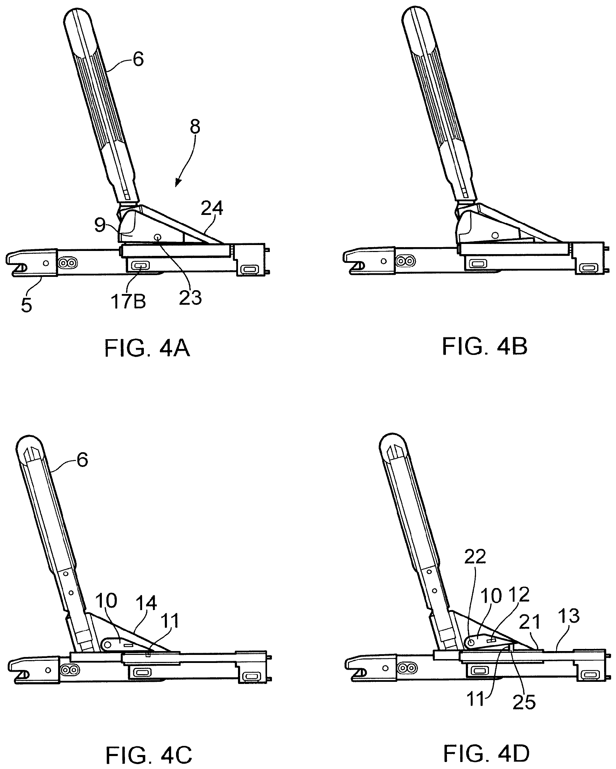

Furthermore, the child safety seat 1 also comprises a front brace 6 and a floor support 7, where the front brace 6 is in abutment with a back portion of the vehicle seat 100 and the floor support 7 is in abutment with the floor of the vehicle when the child safety seat 1 is secured in the vehicle seat 100. The front brace 6 and the floor support 7 will prevent the child safety seat 1 from rotating about the standard anchorage point in the event of a collision with the vehicle. According to the present invention, the front brace 6 is adapted to be adjustable relative the child seat S (or base 2), where the purpose of the adjustment of the front brace 6 is to provide more space for the legs of a child arranged in the child safety seat 1. The front brace 6 and an adjustment mechanism 8 for the front brace 6 will be described and discussed in greater detail according to figures 4A to 4D.

Figure 2A shows the child safety seat 1 according to the present invention, where it can be seen that the front brace 6 is arranged in a most inward position, i.e. a position where there is a small gap between the front space 6 and an ending of the sitting section 3 of the child safety seat 1. The front brace 6 is locked in this position through the adjustment mechanism 8 for the front brace 6. The child safety seat 1 can be used with the front brace 6 arranged and locked in this most inward position when the child is an infant or when the child is small. This will also result in that a vehicle seat in front of the child safety seat 1 can be pushed closer towards the child safety seat 1, thereby providing more leg space for the driver or the passenger sitting in this seat. Similarly, if the child safety seat 1 is arranged in a front seat, in the most inward position, then the front seat can be pushed closer towards the dashboard in order to provide more leg space for a passenger in a rear seat of the vehicle.

Figure 2B shows the front brace 6 in a most outward position, where it can be seen that the gap between the front brace 6 and the ending of the sitting portion 3 of the child safety seat 1 has increased with a distance D. The front brace 6 is locked in this position through the adjustment device 8. The child safety seat 1 can be used with the front brace 6 arranged and locked in this most outward position for bigger children.

Although only the most inward and most outward positions of the front brace 6 are shown and described, it should be understood that the adjustment mechanism 8 is provided to allow for further locking positions between the most inward and outward positions, whereby the child safety seat 1 according to the present invention can be used for a longer period of time as the child safety seat 1 can be adapted to a growing child resulting in that using the child safety seat 1 will be more comfortable for the child.

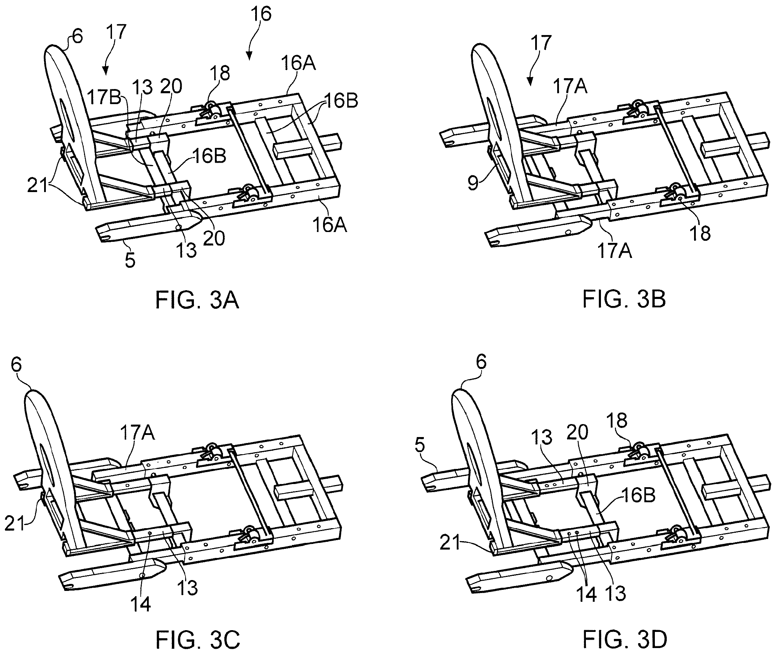

Figures 3A to 3D show how the Isofix connectors 5, through the Isofix connector frame 17, and the front brace 6 are connected to the frame 16 of the base 2.

The frame 16 of the base 2 comprises two hollow bars 16A arranged equidistant between each other and connected through a plurality of transverse bars 16B. The frame 16 of the base 2 may be integrated in the base 2 or may, in suitable ways, be connected to the base 2, for instance by bolts, screws etc. Furthermore, an adjustment mechanism 18 for the Isofix connectors 5 is arranged on an upper side of the hollow bars 16A.

The Isofix connector frame 17 comprises two bars 17A and a transverse bar 17B, where the bars 17A are arranged equidistant between each other as the hollow bars 16A of the frame 16 of the base 2. The traverse bar 17B is connected to ends on one side of the bars 17A. The bars 17A will have a slightly smaller cross-section than the hollow bars 16A of the frame 16 of the base 2, such that the bars 17A can be slidingly received within the hollow bars 16A. One Isofix connector 5 will furthermore be connected to each of the bars 17A, on the outside of the bars 17A. The Isofix connectors 5 are preferably pivotally connected to the bars 17A, in order to allow for better adaption of the Isofix connectors 5 according to the anchorage points in the vehicle, but the Isofix connectors 5 may also be arranged non-pivotally to the bars 17A. The Isofix connectors 5 and the bars 17A are connected through appropriate means, for instance a bolt, rivet or the like.

An upper side of the two bars 17A is provided with a plurality of spaced apart apertures 19 along the length of the bars 17A, where these apertures 19, together with the adjustment mechanism 18 for the Isofix connectors 5, are used to lock and unlock the Isofix connectors 5 and to allow for adjustment of the Isofix connectors 5.

The adjustment mechanism 18 for the Isofix connectors 5 comprises a push button 18A which is connected to one side of a lever 18B, and where a pin 18C is connected to an opposite side of the lever 18B. The lever 18B is furthermore pivotally connected to a bolt (not shown).

When the Isofix connectors 5 are locked in a position in the frame 16 of the base 2, the pin 18C of the adjustment mechanism 18 protrudes through an aperture provided in the bars 16A and into one of the apertures 19 provided in the upper side of the bars 17A. When the Isofix connectors 5 are to be pulled further out from, or pushed further into, the frame 16 of the base 2, the push button 18A is pushed down, where this will result in that the lever 18B will pivot about the pivot connection, thereby bringing the pin 18C out of abutment of the aperture 19 in the upper side of the bars 17A. When the pin 18C is brought out of abutment of the aperture 19, the Isofix connectors 5 can be pulled further out or pushed further in into the frame 16 of the base 2.

In order to hold the Isofix connectors 5 locked in a position, a spring (not shown) is connected to the lever 18B, between the pivot connection and the pin 18C, in such a way that the spring will force the pin 18C into abutment with the aperture 19 in the bars 17A when the push button 18A is not in use.

Furthermore, figures 3A to 3D show that two holders 20 in appropriate ways are connected to the traverse bar 16B of the frame 16 of the base 2, where a guiding element 13 extends out of each of the holders 20. An upper side of the guiding element 13 is provided with a plurality of spaced apart holes 14 over the length of the guiding element 13. The guiding elements 13 will be received in hollow bars 21 that are connected to the front brace 6. The hollow bars 21 have a slightly larger cross-section than the cross-section of the guiding elements 13, whereby the front brace 6 can slide along the guide elements 13. An upper side of the hollow bars 21 will then be provided with a hole 25.

The adjustment mechanism 8 for the front brace 6 comprises a release handle 9, where the release handle 9 is connected to a pivot element 10 through a connection element 12, see also figures 4A to 4D. In one end of the pivot element 10 is arranged a pin 11, while the opposite end of the pivot element 10 is connected to a bolt 22 or the like in such a way that the pivot element 10 can pivot about the bolt 22. The release handle 9 is, out of its center, also connected to a bolt 23 or the like, in such a way that the release handle 9 can pivot about the bolt 23. The release handle 9 and the pivot element 10 are arranged within a housing 24 for the front brace 6.

When the front brace 6, i.e. the hollow bars 21, is in a locked position, a spring (not shown) will force the pin 11 through the hole 25 provided in the hollow bars 21 and into abutment with one of the holes 14 provided in the guiding elements 13. Upon adjustment of the front brace 6, the release handle 9 is pushed down, where this will result in that the release handle 9 is pivoted about the bolt 23, lifting a front part of the release handle 9 upwards. As the release handle 9 is connected to the pivot element 10 through the connection element 12, the pivot element 10 will also be lifted upwards. This upward movement of the pivot element 10 will result in that the pin 11 will be brought out of abutment with the hole 14 in the guide elements 13, whereby the front brace 6 can be adjusted to lock with another hole 14 in the guiding elements 13.

Furthermore, as can be seen in figures 5A and 5B, the hollow bars 16A are provided with a slot 26 and the bars 17A are provided with a pin 27. The pin 27 will be arranged in the slot 26, whereby this arrangement will delimit the movement of the Isofix connectors 5 to the length of the slot 26, thereby preventing that the Isofix connectors 5 can be pulled completely out of the frame 16 of the base 2.

Having explained the structure of the child safety seat according to the present invention, the adjustment of the child safety seat 1 will be discussed in the following. When the child safety seat 1 is installed in a vehicle, firstly the front brace 6 is adjusted as described above in order to adapt the child safety seat 1 to the size of the child. Thereafter the Isofix connectors are adjusted to be able to be connected to the standard anchorage point (not shown) provided in the vehicle seat 100. If, for instance, the anchorage points are arranged deeply into the vehicle seat 100, the Isofix connectors must be pushed further out from the base 2 of the child safety seat 1 and then connected to the anchorage points. Once the Isofix connectors 5 have been connected to the anchorage points, the child safety seat 1 is pushed back in the vehicle seat 100 until the front brace 6 is pressed against the back portion of the vehicle seat 100. The adjustment mechanism 18 for the Isofix connectors 5 is then arranged, when subjected to this pushing, in such a way that the pin 18C is forced out of abutment with the aperture 19 provided in the bars 17A, and automatically into abutment with the nest aperture provided in the bars 17A.

The invention has now been explained with the aid of several non-limiting exemplary embodiments. A person with skill in the art will understand that a number of variations and modifications can be made to the safety belt retention device as long as they fall within the scope of the invention as defined in the appended claims.

## Claims

1. A child safety seat (1) for a vehicle comprising a base (2) provided with at least one Isofix connector (5) and a child seat (S) comprising a sitting section (3) and a back section (4), the base (2) comprising a front brace (6), the front brace (6) being movable relative to the child seat (S) through an adjustment mechanism (8) comprising a release handle (9) pivotable about a bolt (23) **characterised in that** the adjustment mechanism (8) further comprises a pivot element (10) pivotable about a bolt (22) and provided with at least one pin (11), the release handle (9) and pivot element (10) further being connected to each other through a connection element (12), such that in use the release handle (9) is activating the at least one pin (11).

2. A child safety seat (1) according to claim 1,
**characterised in that** the front brace (6) is releasably connected to the base (2).

3. A child safety seat (1) according to claim 1,
**characterised in that** the child safety seat (1) further comprises a floor support (7).

4. A child safety seat (1) according to anyone of claims 1-2,
**characterised in that** the child safety seat (1) further comprises two guiding elements (13), each of the guiding elements (13) being provided with a plurality of spaced apart holes (14) over the length of the guiding element (13), the guiding elements (13) being connected to a frame (16) of the base (2).

5. A child safety seat (1) according to anyone of claims 1-2,
**characterised in that** the child seat (1) further comprises two guiding elements (13), each of the guiding elements (13) being provided with a plurality of teeth (14) over the length of the guiding element (13), the guiding elements (13) being connected to a frame of the base (2).

6. A child safety seat (1) according to anyone of claims 1-5,
**characterised in that** the front brace (6) comprises two hollow bars (21) adapted to slidably receive the guiding elements (13).

7. A child safety seat (1) according to anyone of claims 1-6,
**characterised in that** the at least one Isofix connector (5) is connected to an Isofix connector frame (17).

8. A child safety seat (1) according to anyone of claims 1-7,
**characterised in that** the child safety seat (1) further comprises an adjustment mechanism (18) for the Isofix connectors (5).

9. A child safety seat (1) according to claim 8,
**characterised in that** the adjustment mechanism (18) comprises a push button (18A) connected to a lever (18B) including a pin (18C), the lever (18B) being pivotally connected to a bolt.

10. A child safety seat (1) according to claim 6,
**characterised in that** an upper side of the hollow bar (21) is provided with a hole (25).

11. A child safety seat (1) according to claim 7,
**characterised in that** the Isofix connector frame (17) comprises two bars (17A) and a traverse bar (17B).

12. A child safety seat (1) according to claim 11,
**characterised in that** an upper side of the bar (17A) is provided with a plurality of spaced apart apertures (19).

## Patentansprüche

1. Kindersicherheitssitz (1) für ein Fahrzeug, der eine Basis (2) umfasst, die mit mindestens einem Isofix-Verbinder (5) und einem Kindersitz (S) bereitgestellt ist, der einen Sitzbereich (3) und einen Rückenbereich (4) umfasst,
wobei die Basis (2) eine Vorderstütze (6) umfasst, wobei die Vorderstütze (6) über einen Einstellmechanismus (8), der einen Freigabegriff (9) umfasst, welcher um einen Bolzen (23) schwenkbar ist, relativ zu dem Kindersitz (S) beweglich ist, **dadurch gekennzeichnet, dass** der Einstellmechanismus (8) ferner ein Schwenkelement (10) umfasst, das um einen Bolzen (22) schwenkbar ist und mit mindestens einem Stift (11) bereitgestellt ist, wobei der Freigabegriff (9) und das Schwenkelement (10) ferner miteinander über ein Verbindungselement (12) verbunden sind, sodass der Freigabegriff (9) bei Verwendung den mindestens einen Stift (11) aktiviert.

2. Kindersicherheitssitz (1) nach Anspruch 1,
**dadurch gekennzeichnet, dass** die Vorderstütze (6) lösbar mit der Basis (2) verbunden ist.

3. Kindersicherheitssitz (1) nach Anspruch 1,
**dadurch gekennzeichnet, dass** der Kindersicherheitssitz (1) ferner einen Bodenträger (7) umfasst.

4. Kindersicherheitssitz (1) nach einem der Ansprüche 1-2,
**dadurch gekennzeichnet, dass** der Kindersicherheitssitz (1) ferner zwei Führungselemente (13) umfasst, wobei jedes der Führungselemente (13) mit einer Vielzahl von beabstandeten Löchern (14) über die Länge des Führungselements (13) bereitgestellt ist, wobei die Führungselemente (13) mit einem Rahmen (16) der Basis (2) verbunden sind.

5. Kindersicherheitssitz (1) nach einem der Ansprüche 1-2,
**dadurch gekennzeichnet, dass** der Kindersitz (1) ferner zwei Führungselemente (13) umfasst, wobei jedes der Führungselemente (13) mit einer Vielzahl von Zähnen (14) über die Länge des Führungselements (13) bereitgestellt ist, wobei die Führungselemente (13) mit einem Rahmen der Basis (2) verbunden sind.

6. Kindersicherheitssitz (1) nach einem der Ansprüche 1-5,
**dadurch gekennzeichnet, dass** die Vorderstütze (6) zwei hohle Stäbe (21) umfasst, die dazu ausgebildet sind, die Führungselemente (13) gleitend aufzunehmen.

7. Kindersicherheitssitz (1) nach einem der Ansprüche 1-6,
**dadurch gekennzeichnet, dass** der mindestens eine Isofix-Verbinder (5) mit einem Isofix-Verbinderrahmen (17) verbunden ist.

8. Kindersicherheitssitz (1) nach einem der Ansprüche 1-7,
**dadurch gekennzeichnet, dass** der Kindersicherheitssitz (1) ferner einen Einstellmechanismus (18) für die Isofix-Verbinder (5) umfasst.

9. Kindersicherheitssitz (1) nach Anspruch 8,
**dadurch gekennzeichnet, dass** der Einstellmechanismus (18) einen Druckknopf (18A) umfasst, der mit einem Hebel (18B), einschließlich eines Stifts (18C), verbunden ist, wobei der Hebel (18B) schwenkbar mit einem Bolzen verbunden ist.

10. Kindersicherheitssitz (1) nach Anspruch 6,
**dadurch gekennzeichnet, dass** eine obere Seite des hohlen Stabs (21) mit einem Loch (25) bereitgestellt ist.

11. Kindersicherheitssitz (1) nach Anspruch 7,
**dadurch gekennzeichnet, dass** der Isofix-Verbinderrahmen (17) zwei Stäbe (17A) und einen Querstab (17B) umfasst.

12. Kindersicherheitssitz (1) nach Anspruch 11,
**dadurch gekennzeichnet, dass** eine obere Seite des Stabs (17A) mit einer Vielzahl von voneinander beabstandeten Öffnungen (19) bereitgestellt ist.

## Revendications

1. Siège de sécurité pour enfant (1) destiné à un véhicule, comprenant une base (2) munie d'au moins une fixation Isofix (5) et un siège pour enfant (S) comprenant une section d'assise (3) et une section de dossier (4),
la base comprenant un renfort avant (6), le renfort avant (6) étant mobile par rapport au siège pour enfant (S) à l'aide d'un mécanisme de réglage (8) comprenant une poignée de libération (9) qui peut pivoter autour d'un boulon (23), **caractérisé en ce que** le mécanisme de réglage (8) comprend en outre un élément de pivot (10) qui peut pivoter autour d'un boulon (22) et muni d'au moins une broche (11), la poignée de libération (9) et l'élément de pivot (10) étant en outre reliés l'un à l'autre par un élément de liaison (12), de sorte que, pendant l'utilisation, la poignée de libération (9) active la au moins une broche (11).

2. Siège de sécurité pour enfant (1) selon la revendication 1,
**caractérisé en ce que** le renfort avant (6) est relié de manière amovible à la base (2).

3. Siège de sécurité pour enfant (1) selon la revendication 1,
**caractérisé en ce que** le siège de sécurité pour enfant (1) comprend en outre un support de plancher (7).

4. Siège de sécurité pour enfant (1) selon l'une quelconque des revendications 1 à 2,
**caractérisé en ce que** le siège de sécurité pour enfant (1) comprend en outre deux éléments de guidage (13), chacun des éléments de guidage (13) étant muni d'une pluralité d'orifices espacés (14) sur la longueur de l'élément de guidage (13), les éléments de guidage (13) étant reliés à un châssis (16) de la base (2).

5. Siège de sécurité pour enfant (1) selon l'une quelconque des revendications 1 à 2,
**caractérisé en ce que** le siège pour enfant (1) comprend en outre deux éléments de guidage (13), chacun des éléments de guidage (13) étant muni d'une pluralité de dents (14) sur la longueur de l'élément de guidage (13), les éléments de guidage (13) étant reliés à un châssis de la base (2).

6. Siège de sécurité pour enfant (1) selon l'une quelconque des revendications 1 à 5,
**caractérisé en ce que** le renfort avant (6) comprend deux barres creuses (21) adaptées pour recevoir de manière coulissante les éléments de guidage (13).

7. Siège de sécurité pour enfant (1) selon l'une quelconque des revendications 1 à 6,
**caractérisé en ce que** la au moins une fixation Isofix (5) est reliée à une armature de fixation Isofix (17).

8. Siège de sécurité pour enfant (1) selon l'une quelconque des revendications 1 à 7,
**caractérisé en ce que** le siège de sécurité pour enfant (1) comprend en outre un mécanisme de réglage (18) destiné aux fixations Isofix (5).

9. Siège de sécurité pour enfant (1) selon la revendication 8,
**caractérisé en ce que** le mécanisme de réglage (18) comprend un bouton-poussoir (18A) relié à un levier (18B) comprenant une broche (18C), le levier (18B) étant relié de manière pivotante à un boulon.

10. Siège de sécurité pour enfant (1) selon la revendication 6,
**caractérisé en ce qu'**un côté supérieur de la barre creuse (21) est muni d'un orifice (25).

11. Siège de sécurité pour enfant (1) selon la revendication 7,
**caractérisé en ce que** l'armature de fixation Isofix (17) comprend deux barres (17A) et une barre transversale (17B).

12. Siège de sécurité pour enfant (1) selon la revendication 11,
**caractérisé en ce qu'**un côté supérieur de la barre (17A) est muni d'une pluralité d'ouvertures espacées (19).
